# EUROPEAN PATENT APPLICATION

(11) **EP 4 624 336 A1**
(43) Date of publication of application: **01.10.2025**
(21) Application number: 24166752.6
(22) Date of filing: 27.03.2024
(51) Int. Cl.: B64D 45/00, B64D 47/08

(54) **MONITORING SYSTEM AND METHOD FOR MONITORING HEAT-EMITTING COMPONENTS IN A VEHICLE COMPARTMENT**

(71) Applicant: Airbus Operations GmbH, 21129 Hamburg (DE)
(72) Inventor: Hegenbart, Matthias, 21129 Hamburg (DE); Albers, Frederik, 21129 Hamburg (DE)

(57) **Abstract**

The present invention relates to a monitoring system (10) for heat-emitting components in a vehicle compartment, in particular of an aircraft (100), comprising: at least one thermal imaging camera (2) configured to provide thermal monitoring data from heat-emitting components (1) in a vehicle compartment monitored by at least one of the thermal imaging camera (2), a system controller (3) configured to analyze the thermal monitoring data in relation to a temperature distribution over a visible overall surface of the monitored heat-emitting components (1), wherein the system controller (3) is further configured to release at least one alarm routine if the temperature distribution deviates from a user-defined base setting, which can be set in the system controller (3). In addition, a corresponding method (M) and an aircraft (100) are disclosed.

## Description

### TECHNICAL FIELD OF THE INVENTION

The present invention pertains to a monitoring system for monitoring heat-emitting components in a vehicle compartment, in particular of an aircraft.

### TECHNICAL BACKGROUND

Vehicle compartments, especially vehicle compartments for aircraft, are moved through different temperature zones during their respective usage phase. In this respect, various heating systems are used in vehicle compartments to ensure that people stay there comfortably and to suit their respective needs.

The common heating systems for vehicle compartments have to face particular challenges in areas that are characterized by pronounced thermal bridges. In addition to thermal bridges, the tightness of door seals also pose a problem regarding cabin comfort. Corresponding heated floor/ sidewall panel systems are now known for these areas, which specifically heat an immediate area in a defined manner.

Today's heated floor / sidewall panel systems are comprising of electrical heater elements (ohmic or non ohmic) and each heater segment comprises a temperature sensor which is used for close loop control of the segment by means of a controller.

In order to reduce the number of sensors required, each segment should be as large as possible. Ideally, only one segment per plate should be needed in order to then provide the intended heating function at the selected installation location. At the same time, the sensor should reliably detect overheating scenarios.

Special heating scenarios, which cause more heat than needed, are cost-intensive because they involve particularly high energy consumption during the usage phase. The challenges for the arrangement of sensors are particularly high in these scenarios. Especially since a hyperfunction should be avoided so that cost-effective solutions can be provided. This can be a particularly challenging situation for sensors which are located at specific points and therefore only enable selective monitoring. A comprehensive use of selectively designed sensors is not desirable for cost reasons.

Special challenges can also arise during the usage phase for sensors that are used selectively in larger heating panels. For example, if the sensor is cooled by a stream of cold air, scenarios can arise with regard to a cost-intensive operation of the sensor. Cost-intensive situations with regard to the usage of the sensor can also arise if, for example, a part of the heating plate is covered by a body with good thermal insulation properties that is at a sufficient distance from the heater. These circumstances can be challenging, particularly in the case of heaters with ohmic resistance behavior. Other heating technologies such as infrared heaters are as well possible.

The use of positive temperature coefficient heating elements (PTC heating elements or heaters) is self-limiting but also more expensive and may not be seen as exclusively advantageous in all situations.

### SUMMARY OF THE INVENTION

Against this background, it is an object of the present invention to provide a new technical concept that suits the need for an improved surveillance for heater panels, in particular for ohmic heaters.

This object is achieved by a monitoring system having the features of claim 1, an aircraft having the features of claim 15 and a method having the features of claim 13.

According to the invention, a monitoring system for monitoring heat-emitting components in a vehicle compartment, in particular of an aircraft, comprises at least one thermal imaging camera configured to provide thermal monitoring data from heat-emitting components in a vehicle compartment monitored by at least one of the thermal imaging cameras; a system control configured to analyze the thermal monitoring data in relation to a temperature distribution over a visible overall surface of the monitored heat-emitting components, wherein the system control is further configured to release at least one alarm routine if the temperature distribution deviates from a user-defined base setting, which can be set in the system control.

In contrast to selective measurements with individual sensors in the panels, a larger area can be monitored using the system presented, so that possible anomalies or generally undesirable conditions in the heating function of the heat-emitting components can be determined more quickly and easily.

The detection of an overheating scenario can therefore be detected reliably and promptly, so that appropriate actions can be taken to improve the situation.

The system presented can also be used to better detect heat sinks, so that constructive improvements to the detected heat sinks can be planned.

A deviation from a user-defined base setting can, for example, refer to specifically measured values. For example, adjustable values can be stored in the system controller, so that undesirable deviations can then be detected using a calculation routine in the system controller and the alarm is consequently triggered.

Depending on the default settings selected by a user in the system controller, any undesired applications of the heat-emitting components can also be identified quickly and reliably using the invention, so that improvements can be made promptly. For example, a high energy requirement of the heat-emitting components can be recognized through a detected hyperfunction in the sense of radiated heat. A user-defined base setting can mean both an exclusive setting by the manufacturer of the system presented as well as setting options from a user on site. In this context, it is clear that necessary or legally required presetting's should only be made by the manufacturer itself, for example during the system manufacturing process. Safety functions, such as a maximum achievable temperature or generally an unfavorable temperature distribution, should be defined by the manufacturer with regard to the default settings. This can even include an emergency shutdown or an emergency power reduction if unfavorable events are detected. Convenience functions can be defined by the user, but anything that could be safety-critical should not be influenced by user settings.

In this respect, the system presented can be designed to replace the previous temperature sensors in the heat-emitting components, so that these components can be manufactured with further degrees of freedom with regard to a possible design.

Further according to the invention, an aircraft comprises a monitoring system according to the invention.

Further according to the invention, a method for monitoring heat-emitting components in a vehicle compartment, in particular of an aircraft, comprises providing thermal monitoring data from heat-emitting components in a vehicle compartment monitored with at least one thermal imaging cameras; analyzing the thermal monitoring data in relation to a temperature distribution over a visible overall surface of the monitored heat-emitting components with a system controller and releasing at least one alarm routine if the temperature distribution deviates from a user-defined base setting, which can be set in the system controller, with the system controller.

The advantages mentioned above in relation to the system according to the invention also apply in the same way to the method presented. It is conceivable that the presented method can be designed to be expandable in the sense of the presented system.

Thus, one idea of the present invention is to detect possible overheating scenarios in relation to application scenarios of the heat-emitting components.

Instead of selective monitoring with individual sensors, the presented invention provides essentially area-wide monitoring of the heat-emitting components with regard to their radiated heat. Special heat patterns can, for example, indicate that the monitored heat-emitting component (which can also be referred to as a panel) is covered by a cardboard box or the like. The thermal image shows a cold surface with a concentration of heat at its boundaries. Recognizing these heat patterns by the controller could also be advantageous.

Advantageous embodiments and improvements of the present invention are found in the subordinate claims.

According to an embodiment of the invention, the system further comprises at least one 3D-scan-system, in particular one lidar system, configured to provide three-dimensional monitoring data of a vicinity of the heat-emitting components. In this context, the system controller is further configured to analyze the three-dimensional monitoring data regarding foreign objects in the vicinity of the heat-emitting components and to release at least one alarm routine if a result of the analyze of the three-dimensional monitoring data deviates from a user-defined base setting, which can be set in the system controller.

In this way, it is possible to use the system presented in an advantageous manner to detect objects or, in general, any elements that have been placed on the heat-emitting components and can cause possible heat build-up there. In the worst case, parked objects can lead to cost intensive overheat scenarios if these objects are not discovered beforehand and removed in a timely manner.

The system can also be used advantageously when objects represent a side barrier to radiated heat from heat-emitting components. In other words, any unwanted placement of objects in the vicinity of the heat-emitting components can be detected quickly and reliably using the system presented. The triggered alarm can be recognized by staff in the vehicle compartment, so that the necessary measures can then be taken in good time, for example to prevent a heat blockage or the like.

For example, in case an object is placed on a heat-emitting component, for example in the form of a heated floor panel, and does not move, it will be detected, and after a defined time the heat-emitting component is switched off or at least the power is reduced.

The term *"vicinity"* can be understood as the volume of space directly adjacent to the heat-emitting components, whereby a limitation can be defined, for example, by the achievable proximity of the direct heat radiation emitted by the heat-emitting components, which can be directly recognized as such by a person. The objects can be, for example, cardboard boxes or plastic bags.

According to another embodiment of the invention, the analyze of the three-dimensional monitoring data is based on a temporal series of three-dimensional monitoring data collected.

A temporal (time) series of three-dimensional monitoring data can, for example, be a sequence of recorded actual states in relation to the space to be monitored, i.e. the spatial vicinity to the heat-emitting components, in a user-defined time interval. For example, data is supplemented with another value every minute. Continuous monitoring can also be provided, with values over certain periods of time then being summarized to form respective interim results.

The system can therefore be used in an advantageous manner to promptly detect undesirably placed objects, in particular objects that are placed over a period of time that is classified as too long, in the vicinity of the heat-emitting components and, depending on the pre-settings, to trigger an alarm accordingly.

False alarms can be advantageously prevented using this embodiment if, for example, the pre-settings are made such that a short placement of objects, for example one or two minutes, is considered acceptable. In this context, the phrase alarm does not necessarily mean to trigger a signal to the cabin crew. It is conceivable that at first, a reduction or even shut off of the heater power can be provided or triggered. Furthermore it can comprise alerting the crew or provide any of the alarm routines.

In some embodiments of the inventions, the system controller is further configured to release the at least one alarm routine only if the result of the analyze based on the thermal monitoring data deviates from a user-defined base setting, which can be set in the system controller and if the result of the analyze based on the three-dimensional monitoring data deviates from a user-defined base setting, which can be set in the system controller.

This form of linking the analyzes carried out allows the provision of a particularly robust system, so that alarms are only triggered when the undesirable situation can be classified as particularly disadvantageous.

According to another embodiment of the invention, the at least one thermal imaging camera is located and aligned so that it observes at least a substantial portion of a visual surface of at least one of the monitored heat-emitting components.

A particularly reliable system can thus be created. Ideally, the thermal imaging camera is aligned and adjusted so that it completely captures the entire visible surface area of one heat-emitting component. For example, it is conceivable that at least one thermal imaging camera is provided for each heat-emitting component, in particular one thermal imaging camera per functional heating section of a component, so that it observes at least a substantial portion of a visual surface of at least one of the monitored heat-emitting components.

It is also conceivable that one thermal imaging camera is provided per functional heating section of a heat-emitting component or per heat-emitting component, with respective detection areas of the thermal imaging cameras or per heated areas at least partially overlapping, so that an additional evaluation option in the sense of comparison with default settings can be implemented in connection with the system controller. Redundancy should be, for example, considered to get an acceptable reliability.

According to an embodiment of the invention, the at least one 3D-scan-system, in particular the one lidar system, is located and aligned so that it observes at least a substantial portion of a visual surface of at least one of the monitored heat-emitting components.

Inconveniently placed objects can therefore be detected particularly reliably and, depending on the presetting, a particularly reliable alarm routine can be triggered.

A substantial portion of a visual surface to be observed can be viewed in a range between fifty and seventy-five percent of the total area, more preferably in a range between seventy-five and eighty-five percent of the total area and even more preferably between eighty-five and ninety-five percent of the total area.

In some embodiments of the inventions, the at least one thermal imaging camera is located in or at an expandable object of the vehicle compartment, in which the heat-emitting components are arranged, in particular in or at a ceiling panel of the vehicle compartment or in or at a partition wall of the vehicle compartment or in or at a compartment monument of the vehicle compartment and the at least one 3D-scan-system, in particular the one lidar system, is located in or at an expandable object of the vehicle compartment, in which the heat-emitting components are arranged, in particular in or at a ceiling panel of the vehicle compartment or in or at a partition wall of the vehicle compartment or in or at a compartment monument of the vehicle compartment.

The system presented can therefore fit into the environment of the vehicle compartment in a particularly space-saving manner, so that usage conflicts with other assemblies within the vehicle compartment can be avoided. It is also conceivable that a combination of the system presented with other video systems, such as a passenger video surveillance system or a cockpit door surveillance system or the like, for safety purposes are possible.

Expandable objects of the vehicle compartment are characterized by the fact that they are essentially designed to be installed and expanded as an entire object. These can be, for example, partition modules or the like. Further a self-testing routine can be implemented in the controller so that in case it does not detect any plausible video or temperature data the heating system is switched off or at least reduced in its maximum power so that unfavorable scenarios can be avoided.

An installation position of a thermal imaging camera in an object can, for example, be provided so that only a lens area is visible on the surface of the object, for example in the form of a fisheye. In contrast, it can also be provided that the complete thermal imaging camera or the complete 3D-scan-system is arranged outside, i.e. on an object. This then has the advantage that maintenance work can be carried out particularly easily.

According to another embodiment of the invention, the at least one alarm routine is selected from: Outputting at least one control signal for controlling at least one operating state of at least one of the heat-emitting components; outputting at least one control signal for controlling at least one operating state of at least one heat-emitting part of at least one of the heat-emitting components; outputting an emergency shutdown signal to turn off at least one of the heat-emitting components; outputting at least one visual alarm signal using visual alarm means of the system; outputting at least one acoustic alarm signal using acoustic alarm means of the system.

Depending on the location of use of the system presented, appropriate alarm routines can be provided. Depending on the scenario and the intended default settings, one of the aforementioned alarm routines can also be triggered.

In more harmless cases, a visual alarm routine is sufficient, for example in the form of a flashing light or the like. In particularly unfavorable scenarios, the system can be used to regulate the heating power of the components, including emergency shutdown.

The at least one visual alarm signal can also be in the form of a hint regarding a maintenance notification or the like. E.g. in the event that there are several cameras and one of them does not match the others an appropriate maintenance notification could be triggered. It is also conceivable that a maintenance notification is provided if the image or the image evaluation deviates from a target state.

According to another embodiment of the invention, the system controller is further configured to provide the results from the respective analyses in the form of imaging data so that they can then be accessed on an image-displaying device, in particular on a flight attendant panel of the aircraft, and wherein the system controller is further configured to be connectable with a cabin intercommunication system of the aircraft or configured to be connectable with an external computer unit.

For example, the system presented can be connectable to a flight attendant panel using appropriate interfaces, so that the information collected by the system can be displayed in real time and can therefore also be evaluated and assessed by the cabin crew in the vehicle compartment.

In this way, an overall overview of the respective heat-emitting components can be quickly provided, resulting in a particularly user-friendly system.

An external computer unit can be for example one of an external data analysis center or the like. The data can be made available to an engineering center so that they are further evaluated by software in the controller (decentralized) or elsewhere in the aircraft (centralized). The complete data or the result of an onboard evaluation (onboard data processing) can then be sent. e.g. via the aircraft data network. And from there via a data transmission system to the engineering center. An onboard display is useful for maintenance or testing. An external computer unit can also be in the form of a portable device that can connect to the system via a data interface or via available display units. Data can further be connected to an aircraft data system to distribute the video/3d/temperature raw data or at least some results of a processing performed in the system controller via the data network to other systems, ground stations or the like.

To transmit the respective control signal according to an alarm routine, the system can either be connected directly to the heat-emitting components or can also be indirectly connected to them via a central control unit, for example in the form of a cabin intercommunication data system, within the vehicle compartment.

According to another embodiment of the invention, at least one of the at least one thermal imaging camera is part of a video surveillance system, which is arranged in the vehicle compartment.

In this way, the presented system fits particularly advantageously into an existing architecture of a vehicle compartment. Particularly advantageous because existing infrastructure elements of the video surveillance system can be used, so that, for example, additional cable harnesses or the like do not have to be laid here.

Existing installation locations for existing video surveillance of the vehicle compartment can also be easily adapted so that additional functions or an additional camera system can be arranged there.

According to another embodiment of the invention, at least one of the at least one 3D-scan-system, in particular the one lidar system, is part of a video surveillance, which is arranged in the vehicle compartment.

The advantages mentioned above apply equally to this particular embodiment.

According to another embodiment of the invention, the heat-emitting components in the vehicle compartment are part of the monitoring system and are selected from: heated floor panels for vehicle compartments; heated sidewall panels for vehicle compartments; segment of heated floor panels for vehicle compartments; segment of heated sidewall panels for vehicle compartments; heated seats.

The heat-emitting components of the system can therefore be selected to be particularly well-coordinated with one another, so that a particularly efficient system can be provided.

According to another embodiment of the invention, the method includes the following further steps: providing three-dimensional monitoring data from a vicinity of the heat-emitting components in a vehicle compartment monitored with at least one 3D-scan-system, in particular one lidar system, analyzing the three-dimensional monitoring data regarding foreign objects near the heat-emitting components with the system controller and releasing at least one alarm routine if a result of the analyze of the three-dimensional monitoring data deviates from a user-defined base setting, which can be set in the system controller, with the system controller.

This advantageous implementation of the method is therefore suitable to detect objects or, in general, any elements that have been placed on the components and can cause possible heat build-up there.

### BRIEF SUMMARY OF THE DRAWINGS

The invention will be explained in greater detail with reference to exemplary embodiments depicted in the drawings as appended.

The accompanying drawings are included to provide a further understanding of the present invention and are incorporated in and constitute a part of this specification. The drawings illustrate the embodiments of the present invention and together with the description serve to explain the principles of the invention. Other embodiments of the present invention and many of the intended advantages of the present invention will be readily appreciated as they become better understood by reference to the following detailed description. The elements of the drawings are not necessarily to scale relative to each other. In the figures, like reference numerals denote like or functionally like components, unless indicated otherwise.

The present invention is explained in more detail below with reference to the embodiments shown in the schematic figures:
- Fig. 1: shows a schematic view of a monitoring system for monitoring heat-emitting components in a vehicle compartment, in particular of an aircraft, according to an embodiment of the invention;
- Fig. 2: shows a schematic side view of a monitoring system for monitoring heat-emitting components in a build in state in a vehicle compartment, in particular of an aircraft, according to another embodiment of the invention;
- Fig. 3: schematically depicts a flow diagram of a method for monitoring heat-emitting components in a vehicle compartment, in particular of an aircraft, using the system of Fig. 1;
- Fig. 4: shows a passenger aircraft equipped with the system of Fig.1.

In the figures of the drawing, elements, features and components which are identical, functionally identical and of identical action are denoted in each case by the same reference designations unless stated otherwise.

### DESCRIPTION OF EXEMPLARY EMBODIMENTS

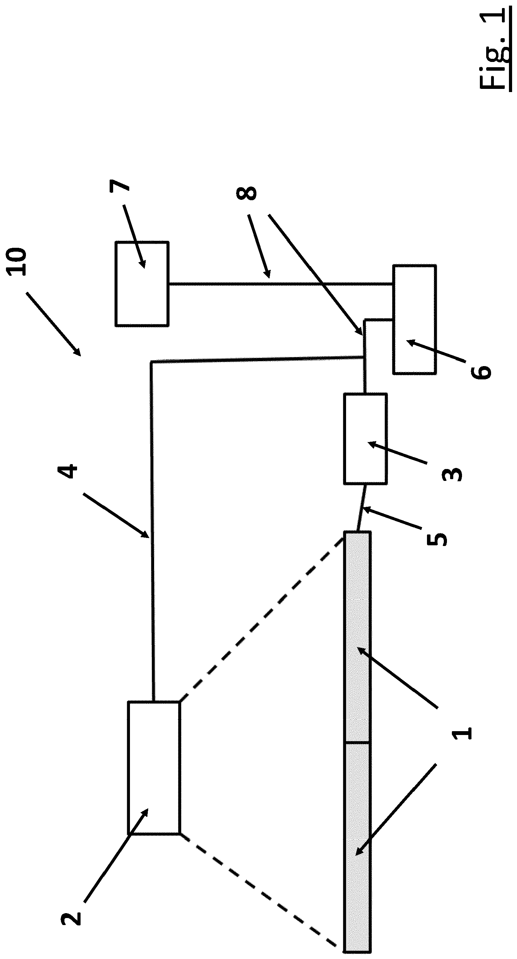

Fig. 1 shows a schematic view of a monitoring system 10 for monitoring heat-emitting components 1 in a vehicle compartment, in particular of an aircraft 100, according to an embodiment of the invention.

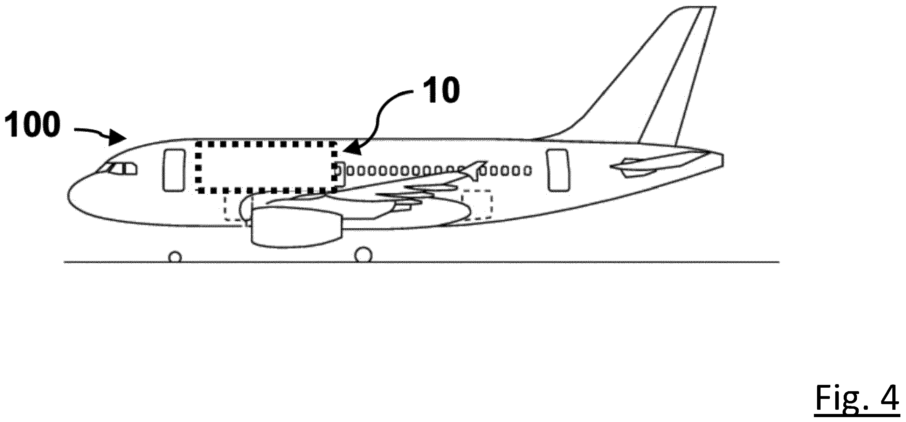

The monitoring system 10 is provided to monitor a vehicle compartment, e.g. a passenger cabin of a passenger aircraft 100 as exemplarily depicted in Fig. 4, in order to monitor heat-emitting components 1 placed in this compartment. In this schematic view, two heat-emitting components 1 are shown arranged next to each other. For example, these heat-emitting components 1, when switched on, emit heat in a vicinity of a floor area of the aircraft cabin and thus heat the surrounding area above the heat-emitting components 1.

In relation to the image plane, a thermal imaging camera 2 is shown above the heat-emitting components 1. In an embodiment not shown in detail, two or more thermal imaging cameras 2 could also be provided, whereby their arrangement could, for example, be provided next to one another or locally offset.

The dashed lines below the thermal imaging camera 2 indicate the area that the thermal imaging camera 2 captures. In other words, the thermal imaging camera 2 is designed to provide thermal monitoring data in the area framed by the dashed lines. In Fig.1, this could be thermal monitoring data in relation to a temperature distribution over a visible total area of the monitored heat-emitting components 1.

The thermal imaging camera 2 is shown connected to a system controller 3 via a first connecting line 4. Instead of a physical connection in the form of the connecting line 4, any radio connections or the like are also conceivable.

The system controller 3 could be configured to analyze the thermal monitoring data in relation to the temperature distribution over a visible overall surface of the monitored heat-emitting components 1. Furthermore, the system controller 3 could be configured to release at least one alarm routine if the temperature distribution deviates from a user-defined base setting, which can be set in the system controller 3.

It is conceivable, for example, that a system controller program is kept in the system controller 3, which evaluates the thermal monitoring data received from the thermal imaging camera 2 in such a way that a comparison of this thermal monitoring data to a preset value, which can be stored in a user-defined manner in the system controller program, causes the alarm routine to be triggered. In addition, this data can be sent, for example, to the aircraft data system or at least a processed result generated from this data.

If, for example, the temperature distribution deviates from a user-defined base setting, which can be set in the system controller 3, the alarm routine could be triggered by the system controller 3.

For example, if a comparison shows that the measured values are higher than a preset value, an alarm routine could be the provision of a switch-off signal for the heat-emitting components 1. In order to transmit such an emergency switch-off signal, the system controller 3 in FIG. 1 is connected to the heat-emitting components 1 with a second connecting line 5. Instead of a physical connection in the form of the second connecting line 5, any radio connections or the like are also conceivable.

It is conceivable that the heat-emitting components 1 shown have control units or the like (not shown in Fig.1) which can be connected to the system controller 3 by means of suitable interfaces, so that control signals, provided by the system controller 3, lead to a desired functionality in the heat-emitting components 1.

In Fig.1, the system controller 3 is also shown connected to a CIDS 6 (Cabin Intercommunication and Data system) via a third connecting 8. Instead of a CIDS 6 an FCMS (future cabin management system) is also conceivable at this point. The CIDS 6 in turn is shown connected to a FAP 7 (flight attendant panel). The CIDS 6 is connected to the FAP 7 via an extension of the third connecting line 8. In other words, the CIDS is shown connected between the system controller 3 and the FAP 7. In an embodiment not shown in detail, alternative circuits of these components 3, 6, 8 are conceivable. Instead of a physical connection in the form of the third connecting line 8, any radio connections or the like between these components 3, 6, 8 are also conceivable.

The first, the second and the third connection lines 4, 5, 8 could be for example any cable or the like (for example CAN bus, discrete data connection, fiber network, wireless Lan, Bluetooth), which suits the technical requirements in a vehicle compartment, in particular of a vehicle compartment in an aircraft 100.

In an embodiment not shown in detail, it is conceivable that a higher-level control unit of the heat-emitting components 1 or even each individual segment of the respective heat-emitting components 1 can be controlled by the CIDS and the control signals provided by the system controller 3 and triggered by one of the alarm routines provide a desired functionality for the components via this path cause. For example, the control signals provided by the system controller 3, which are a respective form of alarm routine depending on the detected scenario, are designed to control the CIDS, which in turn brings about a desired functionality in the heat-emitting components.

In addition to the at least one thermal imaging camera 2, a 3D-scan-system (not shown in Fig. 1), in particular a lidar system, can also be provided. Such a 3D-scan-system is, for example, installed or arranged in the immediate vicinity of the thermal imaging camera 2, so that essentially the same area can be monitored. The 3D-scan-system can be configured to provide three-dimensional monitoring data of a vicinity of the heat-emitting components 1.

The system controller 3 can be further configured to receive and analyze the three-dimensional monitoring data regarding foreign objects in the vicinity of the heat-emitting components 1 and to release at least one alarm routine if a result of the analyze of the three-dimensional monitoring data deviates from a user-defined base setting, which can be set in the system controller 3. It is conceivable that this controller 3 can be combined with a surveillance system based on lidar sensors e.g. for safety purposes.

The heat-emitting components 1 to be monitored can also be selected from the following, for example: heated floor panels for vehicle compartments; heated sidewall panels for vehicle compartments; segment of heated floor panels for vehicle compartments; segment of heated sidewall panels for vehicle compartments.

The system presented is designed to be sufficiently flexible so that these heat-emitting components 1 can also be monitored in the sense of the invention presented.

The system presented can be furthermore connected to existing temperature sensors which are placed in the heat-emitting components 1. They can be used in combination with the proposed components from the presented monitoring system 10.

Furthermore, in an embodiment not presented further, it can be provided that communication is provided between the A/C system and the heated floor panel/heated sidewall panel system. This can be provided, for example, to enable power shedding with other systems (e.g. galley inserts) or to coordinate the temperature setting of the air conditioning with the setting of the heated floor/sidewall panels and to control the panels together with the air conditioning based on a target temperature.

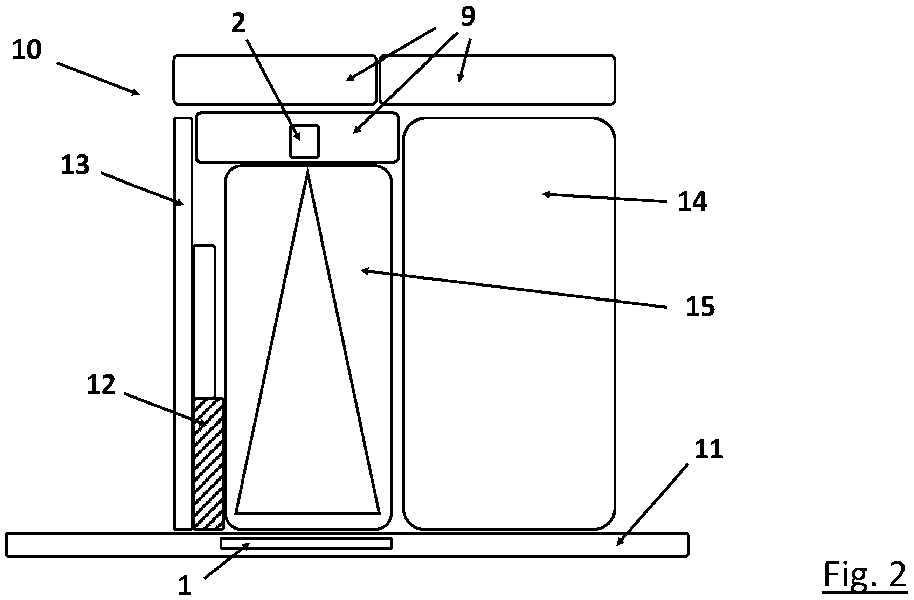

Fig. 2 shows a schematic side view of a monitoring system 10 for monitoring heat-emitting components 1 in a build in state in a vehicle compartment, in particular of an aircraft, according to another embodiment of the invention. Due to the built-in location, only one thermal imaging camera 2 of the monitoring system 10 can be directly seen in Fig. 2. It is conceivable that other components of this monitoring system 10 are hidden by this ceiling panel 9.

This thermal imaging camera 2 is shown installed in a ceiling panel 9 of the vehicle compartment. Two further ceiling panels 9 are shown above this ceiling panel 9, in which the thermal imaging camera 2 is arranged. In this respect, the ceiling panel 9, in which the thermal imaging camera 2 is shown detachably inserted, can also be a simple cladding panel or the like, which is additionally provided under the two upper ceiling panels 9 in the vehicle compartment, for example to provide an installation space for the monitoring system 10.

An associated surveillance area is shown below the thermal imaging camera 2 in the form of a triangle. It is conceivable that this area is variable depending on the preset associated component of the thermal imaging camera 2. It is also conceivable that two or more thermal imaging camera 2 are provided instead of one camera, in order to achieve an enlarged surveillance area, for example.

In relation to the image plane, a cabin floor 11 is shown below and opposite the ceiling panels 9, in which a heat-emitting component 1 is integrated. When switched on, this heat-emitting component 1 radiates heat, which thus heats a vicinity of this heat-emitting component 1, for example an area directly above this heat-emitting component 1 respectively the cabin floor 11.

To the left (again related to the image plane) of the heat-emitting component 1, a flight attendant seat 12 is shown in a folded state. A partition wall 13 is shown directly behind this flight attendant seat 12. To the right (again related to the image plane) of the heat-emitting component 1, a cabin monument 14 is shown. This cabin monument 14 can, for example, be part of a kitchen or part of an on-board toilet or part of a storage cupboard or the like.

It is conceivable that the thermal imaging camera 2 of the monitoring system 10 is at least partially arranged in the partition wall 13 or in the monument 14 instead of the installation position shown. It is also conceivable that additional thermal imaging cameras 2 from the monitoring system 10 are arranged either in or at the partition wall 13 and/or in or at the monument 14. It is therefore advantageously possible to achieve particularly precise monitoring by means of several thermal imaging cameras 2, which are arranged locally at different positions within the vehicle compartment.

The area shown below the thermal imaging camera 2 can be an entrance area 15 of the vehicle compartment. In this entrance area 15 of the vehicle compartment, an entrance door of the aircraft 100 is also provided in a closed state, not shown in more detail in Fig. 2. Depending on the location and flight altitude, such an entrance area 15 has various thermal bridges due to the entrance door provided. In order to counteract an undesirable or excessive temperature fluctuation, the heat-emitting component 1 is provided for the purpose of temporarily heating this area.

In an embodiment not shown in detail, it is conceivable that the heat-emitting component 1 is arranged in the partition wall 13 and the thermal imaging camera 2 is therefore aligned so that it monitors this associated area, or that even a different installation position of the thermal imaging camera 2 is selected in order to reliably monitor the functionality of the heat-emitting component 1 arranged in the partition wall 13.

In addition to the at least one thermal imaging camera 2, a 3D-scan-system (not shown in Fig. 2), in particular a lidar system, can also be provided. Such a 3D-scan-system is, for example, installed or arranged in the immediate vicinity of the thermal imaging camera 2, so that essentially the same area respectively the same heat-emitting components 1 or the same segments from the heat-emitting components 1 can be monitored.

The 3D-scan-system can be configured to provide three-dimensional monitoring data of a vicinity of the heat-emitting components 1.

The system controller 3 can be further configured to receive and analyze the three-dimensional monitoring data regarding foreign objects in the vicinity of the heat-emitting components 1 and to release at least one alarm routine if a result of the analyze of the three-dimensional monitoring data deviates from a user-defined base setting, which can be set in the system controller 3.

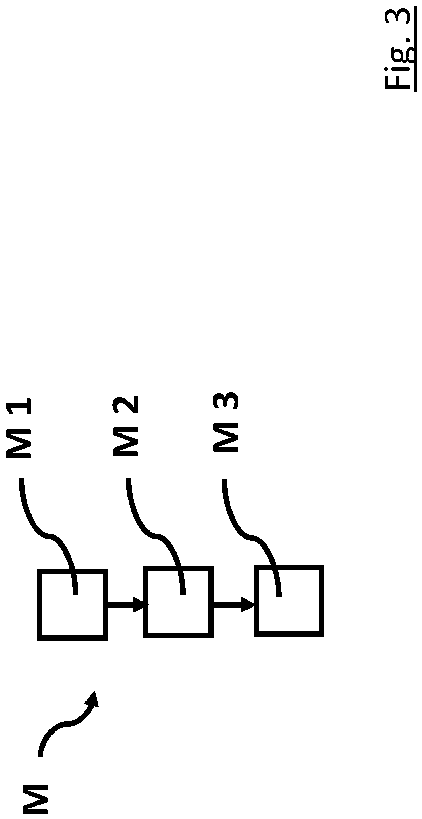

Fig. 3 shows a method M for monitoring heat-emitting components 1 in a vehicle compartment, in particular of an aircraft 100. This methods M comprises the following steps: providing M1 thermal monitoring data from heat-emitting components 1 in a vehicle compartment monitored with at least one thermal imaging camera 2, analyzing M2 the thermal monitoring data in relation to a temperature distribution over a visible overall surface of the monitored heat-emitting components 1 with a system controller 3 and releasing M3 at least one alarm routine if the temperature distribution deviates from a user-defined base setting, which can be set in the system controller 3, with the system controller 3.

Fig. 4 shows a passenger aircraft 100 equipped with the system 10 of Fig.1.

### LIST OF REFERENCE SIGNS

- 1: heat-emitting component
- 2: thermal imaging camera
- 3: system controller
- 4: first connecting line
- 5: second connecting line
- 6: CIDS
- 7: FAP
- 8: third connecting line
- 9: ceiling panel
- 10: monitoring system
- 11: cabin floor
- 12: flight attendant seat
- 13: partition wall
- 14: cabin monument
- 15: entrance area
- 100: aircraft

## Claims

1. Monitoring system (10) for monitoring heat-emitting components (1) in a vehicle compartment, in particular of an aircraft (100), comprising:
at least one thermal imaging camera (2) configured to provide thermal monitoring data from heat-emitting components (1) in a vehicle compartment monitored by at least one of the thermal imaging cameras (2);
a system controller (3) configured to analyze the thermal monitoring data in relation to a temperature distribution over a visible overall surface of the monitored heat-emitting components (1),
wherein the system controller (3) is further configured to release at least one alarm routine if the temperature distribution deviates from a user-defined base setting, which can be set in the system controller (3).

2. Monitoring system (10) according to claim 1, wherein the system (10) further comprises at least one 3D-scan-system, in particular one lidar system, configured to provide three-dimensional monitoring data of a vicinity of the heat-emitting components (1) and
wherein the system controller (3) is further configured to analyze the three-dimensional monitoring data regarding foreign objects in the vicinity of the heat-emitting components (1) and to release at least one alarm routine if a result of the analyze of the three-dimensional monitoring data deviates from a user-defined base setting, which can be set in the system controller (3).

3. Monitoring system (10) according to claim 2, wherein the analyze of the three-dimensional monitoring data is based on a temporal series of three-dimensional monitoring data collected.

4. Monitoring system (10) according to one of the claims 2 to 3, wherein the system controller (3) is further configured to release the at least one alarm routine only if the result of the analyze based on the thermal monitoring data deviates from a user-defined base setting, which can be set in the system controller (3), and if the result of the analyze based on the three-dimensional monitoring data deviates from a user-defined base setting, which can be set in the system controller (3).

5. Monitoring system (10) according to one of the claims 1 to 4, wherein the at least one thermal imaging camera (2) is located and aligned so that it observes at least a substantial portion of a visual surface of at least one of the monitored heat-emitting components (1).

6. Monitoring system (10) according to one of the claims 1 to 5, wherein the at least one 3D-scan-system, in particular the one lidar system, is located and aligned so that it observes at least a substantial portion of a visual surface of at least one of the monitored heat-emitting components (1).

7. Monitoring system (10) according to one of the claims 1 to 6, wherein the at least one thermal imaging camera (2) is located in or at an expandable object of the vehicle compartment, in which the heat-emitting components (1) are arranged, in particular in or at a ceiling panel (9) of the vehicle compartment or in or at a partition wall (12) of the vehicle compartment or in or at a compartment monument (13) of the vehicle compartment and wherein the at least one 3D-scan-system, in particular the one lidar system, is located in or at an expandable object of the vehicle compartment, in which the heat-emitting components (1) are arranged, in particular in or at a ceiling panel (9) of the vehicle compartment or in or at a partition wall (12) of the vehicle compartment or in or at a compartment monument (13) of the vehicle compartment.

8. Monitoring system (10) according to one of the claims 1 to 7, wherein the at least one alarm routine is selected from: Outputting at least one control signal for controlling at least one operating state of at least one of the heat-emitting components (1); outputting at least one control signal for controlling at least one operating state of at least one heat-emitting part of at least one of the heat-emitting components (1); outputting an emergency shutdown signal to turn off at least one of the heat-emitting components (1); outputting at least one visual alarm signal using visual alarm means of the system (10); outputting at least one acoustic alarm signal using acoustic alarm means of the system (10).

9. Monitoring system (10) according to one of the claims 1 to 8, wherein the system control (3) is further configured to provide the results from the respective analyses in the form of imaging data so that they can then be accessed on an image-displaying device, in particular on a flight attendant panel of the aircraft (100), and wherein the system controller (3) is further configured to be connectable with a CIDS (6) of the aircraft (100) or configured to be connectable with an external computer unit.

10. Monitoring system (10) according to one of the claims 1 to 9, wherein at least one of the at least one thermal imaging camera (2) is part of a video surveillance system, which is arranged in the vehicle compartment.

11. Monitoring system (10) according to one of the claims 1 to 10, wherein at least one of the at least one 3D-scan-system, in particular the one lidar system, is part of a video surveillance, which is arranged in the vehicle compartment.

12. Monitoring system (10) according to one of the claims 1 to 11, wherein the heat-emitting components (1) in the vehicle compartment are part of the monitoring system (10) and are selected from: heated floor panels for vehicle compartments; heated sidewall panels for vehicle compartments; segment of heated floor panels for vehicle compartments; segment of heated sidewall panels for vehicle compartments; heated seats.

13. Method (M) for monitoring heat-emitting components (1) in a vehicle compartment, in particular of an aircraft (100), comprising:
providing (M1) thermal monitoring data from heat-emitting components (1) in a vehicle compartment monitored with at least one thermal imaging cameras (2);
analyzing (M2) the thermal monitoring data in relation to a temperature distribution over a visible overall surface of the monitored heat-emitting components (1) with a system controller (3) and
releasing (M3) at least one alarm routine if the temperature distribution deviates from a user-defined base setting, which can be set in the system controller (3), with the system controller (3).

14. Method (M) according to claim 13, wherein the method (M) includes the following further steps:
providing (M4) three-dimensional monitoring data from a vicinity of the heat-emitting components (1) in a vehicle compartment monitored with at least one 3D-scan-system, in particular one lidar system;
analyzing (M5) the three-dimensional monitoring data regarding foreign objects near the heat-emitting components (1) with a system controller (3) and
releasing (M6) at least one alarm routine if a result of the analyze of the three-dimensional monitoring data deviates from a user-defined base setting, which can be set in the system controller (3), with the system controller (3).

15. Aircraft (100) having a monitoring system (10) according to one of the claims 1 to 12.
